(19) Europäisches Patentamt
European Patent Office
Office européen des brevets

(11) **EP 4 101 648 B1**

(12) **EUROPEAN PATENT SPECIFICATION**

(45) Date of publication and mention of the grant of the patent:
**16.09.2026 Bulletin 2026/38**

(21) Application number: **21751208.6**

(22) Date of filing: **26.01.2021**

(51) International Patent Classification (IPC):
***C09D 11/12*** (2006.01) ***C09D 11/38*** (2014.01)
***C09D 11/326*** (2014.01) ***C09D 11/107*** (2014.01)
***C09D 11/322*** (2014.01) ***B41J 2/01*** (2006.01)
***B41M 5/00*** (2006.01)

(52) Cooperative Patent Classification (CPC):
**C09D 11/12; C09D 11/107; C09D 11/322; C09D 11/326; C09D 11/38**

(86) International application number:
**PCT/JP2021/002577**

(87) International publication number:
**WO 2021/157418 (12.08.2021 Gazette 2021/32)**

(54) **INK, INKJET PRINTING METHOD, AND PRINTING MEDIUM**

TINTE, TINTENSTRAHLDRUCKVERFAHREN UND DRUCKMEDIUM

ENCRE, PROCÉDÉ D'IMPRESSION À JET D'ENCRE ET SUPPORT D'IMPRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2020 JP 2020017526**
**12.06.2020 JP 2020101971**

(43) Date of publication of application:
**14.12.2022 Bulletin 2022/50**

(73) Proprietor: **Nippon Kayaku Kabushiki Kaisha**
**Tokyo 100-0005 (JP)**

(72) Inventors:
- **NAKAGAWA, Yuri**
  **Tokyo 115-8588 (JP)**
- **SAI, Ha**
  **Tokyo 115-8588 (JP)**

(74) Representative: **Maiwald GmbH**
**Elisenhof**
**Elisenstraße 3**
**80335 München (DE)**

(56) References cited:
**WO-A1-2019/004488**
**JP-A- 2014 094 495**
**JP-A- 2016 176 016**
**JP-A- 2018 162 341**
**JP-A- 2018 177 829**
**JP-A- 2019 006 978**
**JP-A- 2019 108 518**
**JP-A- S63 199 775**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 101 648 B1

## Description

TECHNICAL FIELD

The present invention relates to an ink, an inkjet printing method using the ink and a printing medium to which the ink is attached.

BACKGROUND ART

An inkjet printing method using an inkjet printer is a method of generating small droplets of ink and attaching them to a printing medium such as paper so as to perform printing.

In recent years, the inkjet printing method has been increasingly applied for industrial purposes. Coloring agents contained in inkjet inks are broadly divided into a water-soluble coloring agent and a water-insoluble coloring agent. Among them, the water-insoluble coloring agent such as a pigment is generally excellent in various types of robustness as compared with the water-soluble coloring agent. Hence, industrial inkjet inks often contain water-insoluble coloring agents.

A wide variety of printing media such as various types of paper, fiber and film are used for industrial purposes, and a large number of printing media are nonabsorbent or poorly absorbent of ink. As inks used when printing is performed on the above-described printing media which are nonabsorbent or poorly absorbent of ink, a non-aqueous solvent ink, a curable ink and the like are known. However, in terms of safety for the natural environment, living organisms and the like, aqueous inks which substitute for these inks are greatly desired. The aqueous ink as described above often contains, in addition to a water-insoluble coloring agent, a water-insoluble polymer compound such as a polymer or a wax in order to enhance abrasion resistance, solvent resistance and the like. The solid content of the aqueous ink as described above is high, and thus the aqueous ink is highly likely to be dried and a solid is easily formed by the drying. When printing is performed on the printing media which are nonabsorbent or poorly absorbent of ink, a coating is formed by the solid to enhance the fixing property to the printing media and the abrasion resistance. Hence, the robustness of the coating formed by the solid is desired to be increased.

On the other hand, inks are also dried, for example, when they are stored for a long period of time or they are stored in a high temperature or low humidity environment. When an ink filled in an inkjet printer is dried, a solid is formed in the nozzle of an inkjet head or in an ink flow path, and this solid causes clogging. When the clogging occurs in the inkjet head as described above, the discharge of the ink cannot be stably performed, with the result that the image quality of a printed image is lowered disadvantageously and significantly. Furthermore, it is likely that the inkjet head itself cannot be used, and this becomes a major problem. Hence, even when clogging occurs due to a solid in an inkjet head, a capability to be able to easily redissolve the solid with a cleaning liquid is strongly required. However, since the enhancement of the fixing property and the abrasion resistance performed by the formation of the coating described above conflicts with the capability to be able to easily redissolve the solid, an ink which satisfies both the effects has not been proposed yet. Therefore, for example, a method of providing a cap member in the nozzle part of an industrial inkjet head to prevent the drying of an ink is proposed. However, it is significantly difficult to completely prevent the drying of an ink.

Patent Document 1: Japanese Unexamined Patent Application, Publication No. 2005-263972
Patent Document 2: Japanese Unexamined Patent Application, Publication No. 2018-162341
Patent Document 3: PCT International Publication No. WO2015/152291

DISCLOSURE OF THE INVENTION

Problems to be Solved by the Invention

An object of the present invention is to provide an ink which has satisfactory abrasion resistance when the ink is printed on a printing medium that is nonabsorbent or poorly absorbent of ink and which is excellent in the property of redissolving a solid formed by the drying of the ink, an inkjet printing method using the ink and a printing medium to which the ink is attached.

Means for Solving the Problems

Specific means for solving the problems described above include embodiments below.

[1] An ink including: a water-insoluble coloring agent; a oxidized polyethylene wax; a compound represented by

formula (1) or formula (2) below and having a HLB value of 7.5 to 20.0; and water:

$$R^1\text{-}\overset{\overset{\displaystyle O}{\|}}{C}\text{-}O\text{-}[(EO)_{m1}(PO)_{n1}]\text{-}H \qquad (1)$$

in the formula (1), $R^1$ represents a linear or branched C7-C40 hydrocarbon group, EO represents an ethyleneoxy group, PO represents a propyleneoxy group, m1 averages 1 to 300, n1 averages 0 to 10 and when the m1 and the n1 is 1 or more, the EO and the PO are arranged in any order; and

$$R^2\text{-}\overset{\overset{\displaystyle O}{\|}}{C}\text{-}O\text{-}[(EO)_{m2}(PO)_{n2}]\text{-}\overset{\overset{\displaystyle O}{\|}}{C}\text{-}R^3 \qquad (2)$$

in the formula (2), $R^2$ and $R^3$ each independently represent a linear or branched C7-C40 hydrocarbon group, EO represents an ethyleneoxy group, PO represents a propyleneoxy group, m2 averages 1 to 300, n2 averages 0 to 10 and when the m2 and the n2 are 1 or more, the EO and the PO are arranged in any order.

[2] The ink described in [1], further including: at least one type selected from a glycol ether and a C4-C12 alkanediol.

[3] The ink described in [1] or [2], further including: a dispersant.

[4] An inkjet printing method of performing printing by causing an inkjet printer to discharge a droplet of the ink according to any one of [1] to [3] and attaching the droplet to a printing medium.

[5] The inkjet printing method described in [4], in which the printing medium is nonabsorbent or is poorly absorbent of ink.

[6] A printing medium to which the ink described in any one of [1] to [3] is attached.

[7] The printing medium described in [6], in which the printing medium is nonabsorbent or poorly absorbent of ink.

Effects of the Invention

According to the present invention, it is possible to provide an ink which has satisfactory abrasion resistance when the ink is printed on a printing medium that is nonabsorbent or poorly absorbent of ink and which is excellent in the property of redissolving a solid formed by the drying of the ink, an inkjet printing method using the ink and a printing medium to which the ink is attached.

PREFERRED MODE FOR CARRYING OUT THE INVENTION

When in the present specification, a unit is provided in only one of upper and lower limits such as "X to Y%", this means that the units for the upper and lower limits are the same as each other, that is, this means "X% to Y%" or the like.

<Ink>

An ink according to the present embodiment contains: a water-insoluble coloring agent; an oxidized polyethylene wax; a compound represented by formula (1) or formula (2) and having a HLB value of 7.5 to 20.0; and water. The components contained in the ink according to the present embodiment will be described in detail below. For the components described below, one type thereof may be used singly or two or more types may be used together.

[Water-insoluble coloring agent]

The water-insoluble coloring agent means a coloring agent in which a solubility in water at 25°C is generally 5 g/L or less, preferably 3 g/L or less, more preferably 1 g/L or less and further preferably 0.5 g/L or less. The lower limit of the solubility includes 0 g/L.

Examples of the water-insoluble coloring agent include a pigment, a disperse dye, a solvent dye, a water-insoluble resin colored by a coloring agent such as a dye or a pigment and the like. In the present specification, a self-dispersing pigment is included in the water-insoluble coloring agent. Among these water-insoluble coloring agents, the pigment is preferable.

Examples of the pigment include an inorganic pigment, an organic pigment, an extender pigment and the like.

Examples of the inorganic pigment include carbon black, metal oxide, metal hydroxide, metal sulfide, metal

ferrocyanide, metal chloride and the like.

As a coloring agent contained in a black ink, carbon black such as thermal black, acetylene black, oil furnace black, gas furnace black, lamp black, gas black or channel black is preferable. Examples of commercially available carbon black include: Raven series made by Columbia Carbon Co., Ltd.; Monarch series, Regal series, and Mogul series made by Cabot Corporation; ColorBlack series, Printex series, SpecIalBlack series and Nerox series made by Orion Engineered Carbons S.A.; MA series, MCF series, No. 25, No. 33, No. 40, No. 47, No. 52, No. 900 and No. 2300 made by Mitsubishi Chemical Corporation; and the like.

Examples of the organic pigment include various pigments such as azo, diazo, phthalocyanine, quinacridone, isoindolinone, dioxazine, perylene, perinone, thioindigo, anthoraquinone and quinophthalone.

Examples of the organic pigment include: yellow pigments such as C.I. Pigment Yellow 1, 2, 3, 12, 13, 14, 16, 17, 24, 55, 73, 74, 75, 83, 93, 94, 95, 97, 98, 108, 114, 128, 129, 138, 139, 150, 151, 154, 180, 185, 193, 199, 202 and 213; red pigments such as C.I. Pigment Red 5, 7, 12, 48, 48: 1, 57, 88, 112, 122, 123, 146, 149, 150, 166, 168, 177, 178, 179, 184, 185, 202, 206, 207, 254, 255, 257, 260, 264 and 272; blue pigments such as C.I. Pigment Blue 1, 2, 3, 15, 15:1, 15:2, 15:3, 15:4, 15:6, 16, 22, 25, 60, 66 and 80; violet pigments such as C.I. Pigment Violet 19, 23, 29, 37, 38 and 50; orange pigments such as C.I. Pigment Orange 13, 16, 68, 69, 71 and 73; green pigments such as C.I. Pigment Green 7, 36 and 54; black pigments such as Pigment Black 1; and the like.

Examples of the extender pigment include silica, calcium carbonate, talc, clay, barium sulfate, white carbon and the like. The extender pigment is often used together with another coloring agent.

As the disperse dye, known disperse dyes are mentioned. Among them, dyes which are selected from C.I. Dispers are preferable. Specific examples thereof include: yellow dyes such as C.I. Dispers Yellow 9, 23, 33, 42, 49, 54, 58, 60, 64, 66, 71, 76, 79, 83, 86, 90, 93, 99, 114, 116, 119, 122, 126, 149, 160, 163, 165, 180, 183, 186, 198, 200, 211, 224, 226, 227, 231 and 237; red dyes such as C.I. Dispers Red 60, 73, 88, 91, 92, 111, 127, 131, 143, 145, 146, 152, 153, 154, 167, 179, 191, 192, 206, 221, 258 and 283; orange dyes such as C.I. Dispers Orange 9, 25, 29, 30, 31, 32, 37, 38, 42, 44, 45, 53, 54, 55, 56, 61, 71, 73, 76, 80, 96 and 97; violet dyes such as C.I. Dispers Violet 25, 27, 28, 54, 57, 60, 73, 77, 79 and 79:1; blue dyes such as C.I. Dispers Blue 27, 56, 60, 79:1, 87, 143, 165, 165:1, 165:2, 181, 185, 197, 202, 225, 257, 266, 267, 281, 341, 353, 354, 358, 364, 365 and 368; and the like.

The average particle diameter of the water-insoluble coloring agent is generally 50 to 250 nm, and preferably 60 to 200 nm. The average particle diameter in the present specification refers to the average particle diameter of particles measured using a laser light scattering method.

The content of the water-insoluble coloring agent is generally 1 to 30% by mass, preferably 1 to 10% by mass and more preferably 2 to 7% by mass with respect to the total mass of the ink according to the present embodiment.

[Dispersing agent]

When the ink according to the present embodiment does not contain a self-dispersing pigment as the water-insoluble coloring agent, the ink according to the present embodiment preferably contains a dispersing agent in order to disperse the water-insoluble coloring agent in the ink.

The dispersing agent is not particularly limited, and known dispersing agents such as polymer dispersing agents can be used. Examples of the polymer dispersing agent include copolymers formed with at least two types of monomers (preferably at least one type of them is a hydrophilic monomer) selected from monomers such as: styrene and its derivatives; vinylnaphthalene and its derivatives; aliphatic alcohol esters of $\alpha,\beta$-ethylenic unsaturated carboxylic acid; (meth)acrylic acid and its derivatives; maleic acid and its derivatives; itaconic acid and its derivatives; fumaric acid and its derivatives; and vinyl acetate, vinyl alcohol, vinylpyrrolidone, acrylamide and derivatives thereof. Examples of the copolymer as described above include: styrene-(meth)acrylic copolymers such as styrene-(meth)acrylic acid copolymer and styrene-(meth)acrylic acid-(meth)acrylic acid ester copolymer; (meta)acrylic acid ester-(meth)acrylic acid copolymer; polyethylene glycol (meth)acrylate-(meth)acrylic acid copolymer; styrene-maleic acid copolymer; and the like. Examples of the type of copolymer include block copolymer, random copolymer, graft copolymer and the like. These copolymers may be in the form of salt.

In the present specification, the term "(meta)acrylic" is used to include both "acrylic" and "methacrylic". The same is true for "(meth)acrylate" and the like.

The dispersing agent can be synthesized or can be obtained as a commercially available product.

As the dispersing agent obtained by synthesis, an A-B block polymer disclosed in PCT International Publication No. WO2013/115071 is mentioned. A monomer which forms the A block of the A-B block polymer disclosed in PCT International Publication No. WO2013/115071 is at least one type of monomer selected from (meth)acrylic acid and a linear or branched C4 alkyl (meth)acrylate, at least one type of monomer selected from methacrylic acid and n-butyl methacrylate is preferable and these two types of monomers are more preferably used together. A monomer which forms the B block of the A-B block polymer disclosed in PCT International Publication No. WO2013/115071 is at least one type of monomer selected from benzyl methacrylate and benzyl acrylate, and benzyl methacrylate is preferable. Specific

examples of the A-B block polymer include block copolymers disclosed in Synthesis Examples 3 to 8 of PCT International Publication No. WO2013/115071.

Examples of the dispersing agent which can be obtained as a commercially available product include Joncryl series (styrene-acrylic copolymers made by BASF SE) such as Joncryl 62, 67, 68, 678 and 687.

When the styrene-(meth)acrylic copolymer is used as the dispersing agent, a neutralizer is added to dissolve the styrene-(meth)acrylic copolymer in a liquid medium including water, with the result that the styrene-(meth)acrylic copolymer is preferably used as a resin solution. Examples of the neutralizer include ammonia, alkali metal hydroxide, alkaline earth metal hydroxide, an aliphatic amine compound, an alkanolamine compound and the like. Among them, ammonia and alkali metal hydroxide are preferable, and ammonia is more preferable. The amount of neutralizer used is not particularly limited. As a guide, on the assumption that the amount of neutralizer used is a degree of neutralization of 100% when the dispersing agent is neutralized with a theoretical equivalent amount of the acid value of the dispersing agent, the amount of neutralizer used is generally a degree of neutralization of 30 to 300%, and is preferably a degree of neutralization of 50 to 200%.

As the dispersing agent, at least one type selected from the A-B block polymer and the styrene-(meth)acrylic copolymer described above is preferable, and the A-B block polymer and the styrene-(meth)acrylic copolymer described above are more preferably used together. When the A-B block polymer and the styrene-(meth)acrylic copolymer described above are used together, a content ratio between the A-B block polymer and the styrene-(meth)acrylic copolymer described above is generally 3/1 to 7/1, preferably 4/1 to 6/1 and more preferably 4.5/1 to 5.5/1 on a mass basis.

The acid value of the dispersing agent is generally 90 to 200 mg KOH/g, preferably 100 to 150 mg KOH/g and more preferably 100 to 120 mg KOH/g.

The mass average molecular weight of the dispersing agent is generally 10000 to 60000, preferably 10000 to 40000, more preferably 15000 to 30000 and further preferably 20000 to 25000. However, when the dispersing agent is a dispersing agent other than the A-B block polymer described above, the lower limit of the mass average molecular weight is generally 6000, preferably 7000, more preferably 8000 and further preferably 8500. The PDI (mass average molecular weight/number average molecular weight) of the A-B block polymer described above is about 1.29 to 1.49. The PDI is in the range as described above, and thus satisfactory dispersibility and storage stability can be achieved.

The dispersing agent can be used in a state where the dispersing agent is mixed with the water-insoluble coloring agent. The dispersing agent can also be used in a state where a part or the whole of the surface of the water-insoluble coloring agent is coated with the dispersing agent. Alternatively, both the states may be used together.

When the ink according to the present embodiment contains the dispersing agent, the ratio of the total mass of the dispersing agent to the total mass of the water-insoluble coloring agent is generally 0.1 to 1.0, preferably 0.1 to 0.6 and more preferably 0.2 to 0.5.

[Oxidized Polyethylene wax]

The oxidized polyethylene wax is not particularly limited, and known waxes can be used. The ink according to the present embodiment contains the oxidized polyethylene wax, and thus the abrasion resistance of a printed image tends to be satisfactory.

The average particle diameter of the oxidized polyethylene wax is preferably 40 nm to 5 $\mu$m, and more preferably 40 nm to 1 $\mu$m so that clogging in an inkjet head is prevented.

The oxidized polyethylene wax can be obtained as a commercially available product. Examples of the commercially available product of the oxidized polyethylene wax include: AQUACER 515(45) and 1547 made by BYK-Chemie GmbH; HYTEC E series such as E-6500(40), E-9015(45) and E-6314(85) made by TOHO Chemical Industry Co., Ltd.; and the like. The number in parentheses provided to the back of each wax represents the average particle diameter (unit: nm) of the wax.

The content of the oxidized polyethylene wax is generally 0.1 to 10% by mass, preferably 0.2 to 8% by mass, more preferably 0.4 to 5% by mass, further preferably 0.6 to 3% by mass and particularly preferably 0.8 to 1.2% by mass with respect to the total mass of the ink according to the present embodiment.

[Compound represented by formula (1) or formula (2)]

In the formula (1) described above, $R^1$ represents a linear or branched C7-C40 hydrocarbon group, and preferably represents a linear C7-C40 hydrocarbon group. The range of the number of carbons in $R^1$ is preferably C7-C30, more preferably C8-C20, further preferably C9-C19 and particularly preferably C11-C17.

In the formula (2) described above, $R^2$ and $R^3$ each independently represent a linear or branched C7-C40 hydrocarbon group. The range of the number of carbons in each of $R^2$ and $R^3$ is preferably C10-C30, more preferably C13-C21, further preferably C15-C19 and particularly preferably C17.

The hydrocarbon group in $R^1$ to $R^3$ may include an unsaturated bond in the carbon-carbon bond thereof.

Although the type of unsaturated bond is not particularly limited, the type of unsaturated bond is generally a double bond or a triple bond, and preferably a double bond. Although the number of unsaturated bonds is not particularly limited, as a guide, the number of unsaturated bonds is generally 1 to 20, preferably 1 to 10, more preferably 1 to 5, further preferably 1 or 2 and particularly preferably 1.

In the formula (1) and formula (2) described above, m1 and m2 represent the number of ethyleneoxy groups, and n1 and n2 represent the number of propyleneoxy groups. m1 averages 1 to 300, preferably averages 3 to 200, more preferably averages 5 to 175, further preferably averages 7 to 160 and particularly preferably averages 8 to 150. m2 generally averages 1 to 300, preferably averages 4 to 290, more preferably averages 8 to 270, further preferably averages 10 to 260 and particularly preferably averages 12 to 250. n1 and n2 average 0 to 10, preferably average 0 to 5, more preferably average 0 to 3, further preferably average 0 to 2 and particularly preferably average 0.

The HLB value of the compound represented by the formula (1) or formula (2) described above is generally 7.5 to 20.0, and preferably 8.4 to 19.4. A compound which has the HLB value as described above is used, and thus there is a tendency that a satisfactory ink redissolving property can be achieved.

In the present specification, as the HLB value, the value given in the catalogue of the maker of each compound is used, and when the value up to the first digit after the decimal point is given, the value itself is used. When a digit after the decimal point is not given, on the assumption that the first digit after the decimal point is assumed to be "zero", the value is used. When the second and subsequent digits after the decimal point are given, the second digit after the decimal point is rounded off to calculate up to the first digit after the decimal point, and the resulting value is used. When the HLB value of the same compound in the catalogue differs depending on the maker, the HLB value of each maker is independently used by giving the name of the marker (the product name and the like).

As is clear from the fact that m1, n1, m2 and n2 are the average values, the compound represented by the formula (1) or formula (2) is the mixture of a plurality of compounds. As the average value of the mixture, m1, n1, m2 and n2 are described.

Although the HLB value is not given in the catalogue of the maker of each compound, when the HLB value can be calculated using the calculation formula of a Griffin method represented by formula (3) below, the calculated value of the following formula (3) is used. Here, the significant digits of the HLB value are the same as those described above.

$$\text{HLB value} = 20 \times \text{formula weight of hydrophilic group} / \qquad (3)$$

Although the HLB value of the compound is given in the catalogue, it is likely that a part of structural information (for example, the values of m1 and n1) in the formula (1) or formula (2) is not described and thus whether or not the part of structural information is included in the formula (1) or formula (2) is not clear. Even in such a case, when the formula (3) can be utilized to estimate the structural information, based on the estimated value, it is determined whether or not the part of structural information is included in the formula (1) or formula (2). For the HLB value here, the first digit after the decimal point is rounded off, and thus the HLB value is described as an integer.

Examples of the commercially available compound represented by the formula (1) or formula (2) include: EMANON 1112, 3199VB, 3299VB, 3299RV, 4110 and the like made by Kao Corporation; IONET DO-600, MO-200 and the like made by Sanyo Chemical Industries, Ltd.; NOIGEN ES-149D and the like made by DKS Co. Ltd.; and the like.

Table 1 below shows examples of the compound represented by the formula (1) above and the HLB value thereof, and table 2 below shows examples of the compound represented by the formula (2) above and the HLB value thereof. In the table 1 and table 2 below, a "number of unsaturation" means the "number of carbon-carbon unsaturated bonds" included in the hydrocarbon group represented by each of $R^1$ to $R^3$. "HLB" means the HLB value. Although in IONET DL-200 and IONET DS-300 in table 2, the structures thereof are included in the range of the formula (2) above, the HLB values are respectively 6.6 and 7.3, and thus they are compounds that do not satisfy the condition in which "the HLB value is 7.5 to 20.0".

[Table 1]

| Formula (1) | HLB | Number of carbons | Number of unsaturation | m1 | n1 |
|---|---|---|---|---|---|
| | | $R^1$ | $R^1$ | | |
| Ionet MO-200 | 8.4 | 17 | 1 | 12 | 0 |
| Noigen ES-149D | 11.5 | 17 | 1 | 8 | 0 |
| Emanon 4110 | 11.6 | 17 | 1 | 10 | 0 |
| Emanon 1112 | 13.7 | 11 | 0 | 12 | 0 |
| Emanon 3199VB | 19.4 | 17 | 0 | 150 | 0 |

[Table 2]

| Formula (2) | HLB | Number of carbons | | Number of unsaturation | | m2 | n2 |
|---|---|---|---|---|---|---|---|
| | | $R^2$ | $R^3$ | $R^2$ | $R^3$ | | |
| Ionet DO-600 | 10.4 | 17 | 17 | 1 | 1 | 12 | 0 |
| Emanon 3299VB | 18.9 | 17 | 17 | 0 | 0 | 150 | 0 |
| Emanon 3299RV | 19.2 | 17 | 17 | 0 | 0 | 250 | 0 |
| Ionet DL-200 | 6.6 | 11 | 11 | 0 | 0 | 4 | 0 |
| Ionet DS-300 | 7.3 | 17 | 17 | 0 | 0 | 6 | 0 |

The total content of the compound represented by the formula (1) or formula (2) above is generally 0.1 to 5% by mass, preferably 0.5 to 2% by mass and more preferably 0.8 to 1.5% by mass with respect to the total mass of the ink according to the present embodiment.

[Water]

As water, water such as ion exchange water or distilled water which has a low content of impurities (for example, metal ions) is preferable.

The content of water is generally 40 to 80% by mass, preferably 45 to 70% by mass and more preferably 47 to 60% by mass with respect to the total mass of the ink according to the present embodiment.

[Glycol ether and C4-C12 alkanediol]

The ink according to the present embodiment preferably contains at least one type selected from a glycol ether and a C4-C12 alkanediol. The ink according to the present embodiment contains at least one type selected from the glycol ether and the C4-C12 alkanediol, and thus the wet spread of the ink and the drying of the ink on a printing medium which is nonabsorbent or poorly absorbent of ink are satisfactory, with the result that a print quality tends to be enhanced.

Although the glycol ether is not particularly limited, alkyl ether of di or tri C2-C4 alkylene glycol is preferable, and monoalkyl ether of di or tri C2-C4 alkylene glycol is more preferable. Examples of the C2-C4 alkylene glycol moiety include ethylene glycol, propylene glycol, butylene glycol and the like, ethylene glycol and propylene glycol are preferable and propylene glycol is more preferable. The range of the number of carbons of alkyl in the alkyl ether moiety is generally C1-C6, preferably C1-C5, more preferably C2-C4, further preferably C3-C4 and particularly preferably C4.

Specific examples of the glycol ether include ethylene glycol monomethyl ether, ethylene glycol monoethyl ether, ethylene glycol monopropyl ether, ethylene glycol monobutyl ether, diethylene glycol monomethyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, triethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monoethyl ether, tripropylene glycol monopropyl ether, tripropylene glycol monobutyl ether and the like. Among them, diethylene glycol monobutyl ether, propylene glycol monobutyl ether, dipropylene glycol monopropyl ether and dipropylene glycol monobutyl ether are preferable, and dipropylene glycol monobutyl ether is more preferable.

Although the C4-C12 alkanediol is not particularly limited, 1,2- (C4-C12) alkanediol is preferable, and 1,2-(C6-C8) alkanediol is more preferable.

In the C4-C12 alkanediol, an alkanediol which has 7 or more carbon atoms is generally water-insoluble. Specific examples thereof include 1,2-heptanediol, 1,2-octanediol, 5-methyl-1,2-hexanediol, 4-methyl-1,2-hexanediol, 4,4-dimethyl-1,2-pentanediol and the like. Among them, 1,2-octanediol is preferable. In the C4-C12 alkanediol, an alkanediol which has 6 or less carbon atoms is generally water-soluble. Specific examples thereof include 1,2-hexanediol, 1,2-pentanediol, 1,2-butanediol, 4-methyl-1,2-pentanediol, 3,3-dimethyl-1,2-butanediol and the like. Although any of them can be used, 1,2-hexanediol is preferable in that it has less odor.

The total content of the glycol ether and the C4-C12 alkanediol is generally 1 to 30% by mass, preferably 0.2 to 20% by mass, more preferably 0.5 to 10% by mass, further preferably 2 to 8% by mass and particularly preferably 4 to 6% by mass with respect to the total mass of the ink according to the present embodiment.

[Ink preparation agent]

The ink according to the present embodiment may further contain an ink preparation agent in addition to the components described above. Examples of the ink preparation agent include an organic solvent, a surfactant, a preservative, an antifungal agent, a pH adjusting agent, a chelating agent, a rustproofing agent, a water-soluble ultraviolet absorbing agent, antioxidant and the like.
When the ink according to the present embodiment contains an organic solvent, its content is generally 1 to 70% by mass, preferably 10 to 60% by mass, more preferably 20 to 50% by mass, further preferably 25 to 45% by mass and particularly preferably 30 to 40% by mass with respect to the total mass of the ink according to the present embodiment. The total content of ink preparation agents other than the organic solvent is generally 0 to 30% by mass, preferably 0.1 to 20% by mass and more preferably 0.5 to 10% by mass with respect to the total mass of the ink according to the present embodiment.

(Organic solvent)

Examples of the organic solvent include: C1-C6 alkanol having one hydroxy group such as methanol, ethanol, propanol, isopropanol, butanol, isobutanol, second butanol or third butanol; amides such as N,N-dimethylformamide and N,N-dimethylacetamide; lactams such as 2-pyrrolidone, N-methyl-2-pyrrolidone and N-methylpyrrolidin-2-one; cyclic ureas such as 1,3-dimethylimidazolidin-2-one and 1,3-dimethylhexahydropyrimid-2-one; ketones or keto alcohols such as acetone, 2-methyl-2-hydroxypentan-4-one and ethylene carbonate; cyclic ethers such as tetrahydrofuran and dioxane; C2-C3 alkanediol such as ethylene glycol, propylene glycol and 1,3-propanediol; mono, oligo or polyalkylene glycol or thioglycol having C2-C4 (preferably C2-C3) alkylene units such as diethylene glycol, triethylene glycol, tetraethylene glycol, dipropylene glycol, polyethylene glycol or polypropylene glycol having a molecular weight of 400 or more, thiodiglycol or dithiodiglycol; polyols (triols) such as glycerin, diglycerin, hexane-1,2,6-triol and trimethylolpropane; γ-butyrolactone and dimethyl sulfoxide; a compound having a hydroxy group and an ester moiety in a molecule of texanol or the like; and the like. Among them, the C2-C3 alkanediol and the oligo or polyalkylene glycol having C2-C4 alkylene units are preferable, the C2-C3 alkanediol is more preferable and 1,2-(C2-C3) alkanediol is more preferable.

(Surfactant)

Examples of the surfactant include an anionic surfactant, a cationic surfactant, an amphoteric surfactant, a silicone-based surfactant and a fluorine-based surfactant.
Examples of the anionic surfactant include alkyl sulfocarboxylate, α-olefin sulfonate, polyoxyethylene alkyl ether acetate, polyoxyethylene alkyl ether sulfate, N-acyl amino acid or the salt thereof, N-acylmethyl taurine salt, alkyl sulfate polyoxyalkyl ether sulfate, alkyl sulfate polyoxyethylene alkyl ether phosphate, loginate soap, castor oil sulfate ester salt, lauryl alcohol sulfate ester salt, alkylphenol type phosphoric acid ester, alkyl type phosphoric acid ester, alkylarylsulfonate, diethyl sulfoamber acid salt, diethyl hexyl sulfoamber acid salt, dioctyl sulfoamber acid salt and the like.
Examples of the cationic surfactant include a 2-vinylpyridine derivative, a poly-4-vinylpyridine derivative and the like.
Examples of the amphoteric surfactant include lauryldimethylaminoacetic acid betaine, 2-alkyl-N-carboxymethyl-N-hydroxyethyl imidazolinium betaine, coconut oil fatty acid amide propyldimethylaminoacetic acid betaine, polyoctylpolyaminoethylglycine, an imidazoline derivative and the like.
Examples of the silicone-based surfactant include polyether-modified siloxane, polyether-modified polydimethylsiloxane and the like. Examples thereof include: Dynol 960 and 980 made by Air Products and Chemicals, Inc; Silface SAG001, SAG002, SAG003, SAG005, SAG503A, SAG008, SAG009 and SAG010 made by Nissin Chemical Co., Ltd.; BYK-345, 347, 348, 349, 3455, LP-X23288, LP-X23289 and LP-X23347 made by BYK Additives & Instruments; TEGO Twin 4000, TEGO Wet KL245, 250, 260, 265, 270 and 280 made by Evonik Tego Chemie GmbH; and the like.
Examples of the fluorine-based surfactant include a perfluoroalkyl sulfonic acid compound, a perfluoroalkyl carboxylic acid compound, a perfluoroalkyl phosphate ester compound, a perfluoroalkyl ethylene oxide adduct, a polyoxyalkylene ether polymer compound having a perfluoroalkyl ether group in a side chain and the like.

(Preservative)

Examples of the preservative include an organic sulfur-based compound, an organic nitrogen sulfur-based compound, an organic halogen-based compound, a haloarylsulfone-based compound, an iodopropagil-based compound, a haloalkylthio-based compound, a nitrile-based compound, a pyridine-based compound, a 8-oxyquinoline-based compound, a benzothiazole-based compound, an isothiazoline-based compound, a dithiol-based compound, a pyridine oxide-based compound, a nitropropane-based compound, an organic tin-based compound, a phenol-based compound, a

tetraammonium salt-based compound, a triazine-based compound, a thiazine-based compound, an anilide-based compound, an adamantan-based compound, a dithiocarbamate-based compound, a brominated indanone-based compound, a benzyl bromoacetate-based compound, an inorganic salt-based compound and the like. Specific examples of a commercially available preservative include Proxel GXL(S) and XL-2(S) made by Arch Chemical, Inc. and the like.

(Antifungal agent)

Examples of the antifungal agent include sodium dehydroacetate, sodium benzoate, sodium pyridinethione-1-oxide, p-hydroxybenzoic acid ethyl ester, 1,2-benzisothiazolin-3-one, the salts thereof and the like.

(pH adjusting agent)

As long as the pH of the pH adjusting agent can be adjusted to be 5 to 11 without the prepared ink being adversely affected, any material can be used as the pH adjusting agent. Specific examples thereof include: alcanolamines such as diethanolamine, triethanolamine and N-methyldiethanolamine; hydroxides of alkali metals such as lithium hydroxide, sodium hydroxide and potassium hydroxide; ammonium hydroxide (ammonia water); carbonates of alkali metals such as lithium carbonate, sodium carbonate, sodium hydrogen carbonate and potassium carbonate; alkali metal salts of organic acids such as sodium silicate and potassium acetate; inorganic bases such as disodium phosphate; and the like.

(Chelating agent)

Examples of the chelating agent include ethylenediamine tetraacetate disodium, nitrilotriacetate sodium, hydroxyethylethylenediamine triacetate sodium, diethylenetriamine pentaacetate sodium, uracil diacetate sodium and the like.

(Rustproofing agent)

Examples of the rustproofing agent include acid sulfite, sodium thiosulfate, ammonium thioglycolate, diisopropylammonium nitrate, pentaerythritol tetranitrate, dicyclohexylammonium nitrate and the like.

(Water-soluble ultraviolet absorbing agent)

Examples of the water-soluble ultraviolet absorbing agent include a sulfated benzophenone-based compound, a benzotriazol-based compound, a salicylic acid-based compound, a cinnamic acid-based compound, a triazine-based compound and the like.

(Antioxidant)

As the antioxidant, various types of organic and metal complex anti-fading agents can be used. Examples of the organic anti-fading agent include idroquinones, alkoxyphenols, dialkoxyphenols, phenols, anilines, amines, indanes, chromans, alkoxyanilines, heterocycles and the like.

[Physical properties of ink and like]

The pH of the ink according to the present embodiment at 25°C is generally 7 to 11, and preferably 8 to 10. The surface tension of the ink according to the present embodiment at 25°C is generally 10 to 50 mN/m, and preferably 20 to 40 mN/m. The viscosity of the ink according to the present embodiment at 25°C is generally 2 to 30 mPa·s, and preferably 3 to 20 mPa·s. The pH, the surface tension and the viscosity of the ink according to the present embodiment can be adjusted as necessary by the pH adjusting agent, the surfactant, the organic solvent and the like.

The ink according to the present embodiment can be used in various types of printing and the like. For example, the ink according to the present embodiment is suitable for writing tools, various types of information printing, printing and the like, and can be preferably used in inkjet printing.

<Inkjet printing method and printing medium>

An inkjet printing method according to the present embodiment is a method of performing printing by causing an inkjet printer to discharge a droplet of the ink described above and attaching the droplet to a printing medium. When inkjet printing is performed, a container into which the ink described above is filled is loaded into a predetermined position of the

inkjet printer, and thus the printing can be performed as described above. The ink nozzle, the inkjet method and the like of the inkjet printer are not particularly limited, and can be selected according to the purpose.

In the inkjet printing method according to the present embodiment, the ink described above may be used singly or may be used together with another ink. For example, in order to obtain a full-color recorded image, the ink described above can also be used together with an ink containing various types of coloring agents of yellow, blue, red, green, violet and orange.

Preferably, in an industrial inkjet printer, a line-head inkjet printer configuration is adopted in order to increase a printing speed, and printing in a single pass is performed. The ink described above can satisfy the printing conditions as described above.

As the inkjet method, a known method can be used. Specific examples of the inkjet method include a charge control method, a drop-on-demand (pressure pulse) method, an acoustic inkjet method, a thermal inkjet method and the like. Specific examples also include: a method of jetting a large number of small volumes of ink having a low content of a coloring agent in the ink so as to improve an image quality; a method of using a plurality of inks having substantially the same hue and different concentrations of coloring agents in the inks so as to improve an image quality; a method of using a colorless transparent ink so as to enhance the fixing property of a coloring agent; and the like.

The printing medium means a material to which an ink can be attached. Examples of the printing medium include paper, film, fiber or cloth (such as cellulose, nylon or wool), leather, a color filter base material and the like.

Printing media can be roughly divided into a printing medium which includes an ink receiving layer and a printing medium which does not include the ink receiving layer. The printing medium which includes the ink receiving layer is generally called inkjet paper, inkjet film, glossy paper or the like. Examples of the printing medium which does not include the ink receiving layer include: various types of sheets such as coated paper used for applications such as gravure printing and offset printing and art paper; cast coated paper used for label printing; and the like. The ink described above can be suitably used for a printing medium which does not include the ink receiving layer and is nonabsorbent or poorly absorbent of ink.

When the printing medium which does not include the ink receiving layer is used, surface modification treatment is preferably performed on the printing medium in order to enhance the fixing property of the coloring agent and the like. Examples of the surface modification treatment include corona discharge treatment, plasma treatment, flame treatment and the like.

For all the items described above, a combination of preferable items is more preferable, and a combination of more preferable items is further preferable. The same is true for a combination of a preferable item and a more preferable item, a combination of a more preferable item and a further preferable item and the like.

EXAMPLES

Although the present invention will be described in further detail below using Examples, the present invention is not limited to the Examples.

In the Examples, unless otherwise specified, "parts" and "%" mean parts by mass and % by mass, respectively. Unless otherwise specified, operations such as various types of synthesis and preparation in the Examples were performed under stirring. When it was necessary to measure the solid content of the coloring agent in a liquid, MS-70 made by A&D Company, Limited was used to calculate it by a dry weight method as a conversion value of the coloring agent only.

[Preparation example 1: preparation of resin solution A]

25 parts of Joncryl 678 (MW: 8500) and 14.3 parts of triethanolamine were dissolved in 60.7 parts of ion exchange water and were stirred for one hour, and thus a solution was obtained. The resulting solution was referred to as a "resin solution A".

[Preparation example 2: preparation of coloring agent dispersion liquid DP1]

Synthesis Example 3 disclosed in PCT International Publication No. WO2013/115071 was reproduced, and thus a block copolymer was prepared. 5 parts of the resulting block copolymer were dissolved in 20 parts of 2-butane so as to form the uniform liquid. To this liquid, a liquid obtained by dissolving 0.4 parts of sodium hydroxide in 50.6 parts of water and 4 parts of the resin solution A was added, and the mixture was stirred for one hour, with the result that a liquid was obtained. 20 parts of C.I. Pigment Yellow 74 was added to this liquid, dispersion treatment was performed under the condition of 1500 rpm for 15 hours in a sand grinder and thus a liquid was obtained. 100 parts of water was dropped into the resulting liquid, this liquid was filtered and thus a filtrate was obtained. 2-butanone and a part of the water were distilled off from the resulting filtrate under reduced pressure, and thus a coloring agent dispersion liquid having a coloring agent content of 11.2% was

obtained. The resulting coloring agent dispersion liquid was referred to as "DP1".

[Preparation example 3: preparation of ink]

Components listed in tables 3 and 4 below were mixed to obtain liquids each having a total amount of 100 parts, the resulting liquids were thereafter filtered with a membrane filter having a hole diameter of 3 μm and thus the inks of Examples 1 to 13 and Comparative Examples 1 to 13 were obtained. The content of the coloring agent in the total mass of each ink was adjusted to be 4%. In the inks of Comparative Examples 4 to 7, the components of each ink were separated enough to be visually confirmed. Hence, for the inks of Comparative Examples 4 to 7, the stability of the inks was determined to be problematic, and thus evaluation tests to be described later were not performed.

[Preparation example 4: preparation of cleaning liquid]

A cleaning liquid was prepared as in Example 1 except that in table 3 below, water was added instead of the three components of DP1, AQ515 and EMANON 1112 in the components of the ink of Example 1.

Symbols and the like in tables 3 and 4 below have the following meanings.

DP1: coloring agent dispersion liquid obtained in preparation example 2
PG: propylene glycol
12HD: 1,2-hexanediol
DPnB: dipropylene glycol monobutyl ether
TEA: triethanolamine
TEX: texanol
BYK349: silicone-based surfactant BYK349 made by BYK Additives & Instruments
AQ515: oxidized polyethylene wax AQUACER 515 made by BYK-Chemie GmbH
EN1112: EMANON 1112
3199VB: EMANON 3199VB
MO-200: IONET MO-200
ES149D: NOIGEN ES-149D
EN4110: EMANON 4110
3299VB: EMANON 3299VB
DO-600: IONET DO-600
3299RV: EMANON 3299RV
AQ593: polypropylene wax AQUACER 593 made by BYK-Chemie GmbH
TW-80: polyethylene glycol sorbitan monoolate (HLB value: 15), SORGEN TW-80 made by DKS Co. Ltd.

DL-200: IONET DL-200 (HLB value: 6.6) made by Sanyo Chemical Industries, Ltd.

DS-300: IONET DS-300 (HLB value: 7.3) made by Sanyo Chemical Industries, Ltd.

NC2303: Newcol 2303 (polyoxyethylene alkyl ether, alkyl moiety C12-C13, HLB value: 8.3) made by NIPPON NYUKAZAI CO., LTD.

NC2320: Newcol 2320 (polyoxyethylene alkyl ether, alkyl moiety C12-C13, HLB value: 16.4) made by NIPPON NYUKAZAI CO., LTD.

ED200: Phosphanol ED-200 (polyoxyethylene alkyl ether phosphate ester, alkyl moiety is a branched chain C8, the number of oxyethylene groups is 1, HLB value: 11.4) made by TOHO Chemical Industry Co., Ltd.

RS410: Phosphanol RS-410 (polyoxyethylene alkyl ether phosphate ester, alkyl moiety is a branched chain C13, the number of oxyethylene groups is 3, HLB value: 9.0) made by TOHO Chemical Industry Co., Ltd.

[Table 3]

| Component | Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| DP1 | 35.6 | 35.6 | 35.6 | 35.6 | 35.6 | 35.6 | 35.6 | 35.6 | 35.6 | 35.6 | 35.6 | 35.6 | 35.6 |
| PG | 35 | 35 | 35 | 35 | 35 | 35 | 35 | 35 | 35 | 35 | 35 | 35 | 35 |
| 12HD | 5 | 5 | 5 | 5 | 5 | 5 | 5 | 5 | 3 | - | 3 | - | 5 |
| DpNB | - | - | - | - | - | - | - | - | 2 | 5 | 2 | 5 | - |
| TEA | 0.5 | 0.5 | 0.5 | 0.5 | 0.5 | 0.5 | 0.5 | 0.5 | 0.5 | 0.5 | 0.5 | 0.5 | 0.5 |

(continued)

| Component | Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| BYK349 | 1 | 1 | 1 | 1 | 1 | 1 | 1 | 1 | 1 | 1 | 1 | 1 | 1 |
| TEX | 1 | 1 | 1 | 1 | 1 | 1 | 1 | 1 | 1 | 1 | 1 | 1 | - |
| AQ515 | 1 | 1 | 1 | 1 | 1 | 1 | 1 | 1 | 1 | 1 | 1 | 1 | 1 |
| EN1112 | 1 | - | - | - | - | - | - | - | - | - | 1 | 1 | 1 |
| 3199VB | - | 1 | - | - | - | - | - | - | - | - | - | - | - |
| MO-200 | - | - | 1 | - | - | - | - | - | - | - | - | - | - |
| ES-149D | - | - | - | 1 | - | - | - | - | - | - | - | - | - |
| EN4110 | - | - | - | - | 1 | - | - | - | - | - | - | - | - |
| 3299VB | - | - | - | - | - | 1 | - | - | - | - | - | - | - |
| DO-600 | - | - | - | - | - | - | 1 | - | - | - | - | - | - |
| 3299RV | - | - | - | - | - | - | - | 1 | 1 | 1 | - | - | - |
| Water | Balance | | | | | | | | | | | | |

[Table 4]

| Component | Comparative Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| DP1 | 35.6 | 35.6 | 35.6 | 35.6 | 35.6 | 35.6 | 35.6 | 35.6 | 35.6 | 35.6 | 35.6 | 35.6 | 35.6 |
| PG | 35 | 35 | 35 | 35 | 35 | 35 | 35 | 35 | 35 | 35 | 35 | 35 | 35 |
| 12HD | 5 | 5 | 5 | 5 | 5 | 3 | - | 5 | 5 | 5 | 5 | 5 | 5 |
| DpNB | - | - | - | - | - | 2 | 5 | - | - | - | - | - | - |
| TEA | 0.5 | 0.5 | 0.5 | 0.5 | 0.5 | 0.5 | 0.5 | 0.5 | 0.5 | 0.5 | 0.5 | 0.5 | 0.5 |
| BYK349 | 1 | 1 | 1 | 1 | 1 | 1 | 1 | 1 | 1 | 1 | 1 | 1 | 1 |
| TEX | 1 | 1 | 1 | 1 | 1 | 1 | 1 | 1 | 1 | 1 | 1 | 1 | 1 |
| AQ515 | - | 1 | 1 | 1 | 1 | 1 | 1 | - | - | 1 | 1 | 1 | 1 |
| AQ593 | - | - | - | - | - | - | - | 1 | 1 | - | - | - | - |
| EN1112 | - | - | - | - | - | - | - | - | 1 | - | - | - | - |
| TW-80 | - | - | 1 | - | - | - | - | - | - | - | - | - | - |
| DL-200 | - | - | - | 1 | - | - | - | - | - | - | - | - | - |
| DS-300 | - | - | - | - | 1 | 1 | 1 | - | - | - | - | - | - |
| NC2303 | - | - | - | - | - | - | - | - | - | 1 | - | - | - |
| NC2320 | - | - | - | - | - | - | - | - | - | - | 1 | - | - |
| ED200 | - | - | - | - | - | - | - | - | - | - | - | 1 | - |
| RS410 | - | - | - | - | - | - | - | - | - | - | - | - | 1 |
| Water | Balance | | | | | | | | | | | | |

[(A) Evaluation of redissolving property]

20 μL of each of the inks of the Examples and Comparative Examples was dropped with a micropipette on a glass Petri dish of ϕ7cm. The glass Petri dish was dried at 60°C in a constant-temperature chamber for 30 minutes, and thus the dried ink was obtained as a solid for each of the inks. 10 g of the cleaning liquid prepared in Preparation Example 4 was

gently poured on the solid obtained, and the mixture was left to stand still for one hour. The Petri dish after being left to stand still was gently shaken, whether or not the solid was redissolved was visually observed and evaluations were performed with the following three criteria. The results of the evaluations are shown in tables 5 and 6 below.

-Criteria-

A: A large solid and an attachment on the Petri dish were not observed, and all the solid was redissolved;
B: A large solid was not found but an attachment was observed on the Petri dish;
C: A large solid of about 1 mm was found as an insoluble solid and an attachment was observed on the Petri dish.

[(B) Evaluation for abrasion resistance]

A bar coater No. 3 in an automatic coating machine (PI-1210 made by TESTER SANGYO CO., LTD.) was used, and all the surface of "OK Topcoat+" made by OJI PAPER CO., LTD. was coated with each of the inks for evaluation tests and was thereafter dried at 70°C in a constant-temperature chamber for 2 minutes, with the result that specimens were obtained. The abrasion resistance of each of the specimens was evaluated with No. 428 Gakushin type wear tester (friction tester type II) made by YASUDA SEIKI SEISAKUSHO, LTD. Specifically, in a state where a load of 250 g was applied to the specimen, the coated parts were rubbed 20 times and the degree of staining was evaluated using a gray scale for contamination (according to JIS L 0805: 2005) with the following two criteria. The results of the evaluations are shown in tables 5 and 6 below.

-Criteria-

A: Grade 3 or above

C: Less than grade 3

[Table 5]

| Component | Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Redissolving property | A | B | B | A | A | B | A | B | B | B | A | A | B |
| Abrasion resistance | A | A | A | A | A | A | A | A | A | A | A | A | A |

[Table 6]

| Component | Comparative Example | | | | | | | | |
|---|---|---|---|---|---|---|---|---|---|
| | 1 | 2 | 3 | 8 | 9 | 10 | 11 | 12 | 13 |
| Redissolving property | A | C | C | A | A | C | C | C | C |
| Abrasion resistance | C | A | A | C | C | A | A | A | A |

As is clear from the results described above, in the inks of the Examples, the abrasion resistance was satisfactory, and the redissolving property of the solid generated by the drying of the inks was excellent, with the result that it was confirmed that the two contradictory effects were provided in a well-balanced manner. On the other hand, in the inks of the Comparative Examples, only one of the abrasion resistance and the redissolving property was satisfactory as A whereas the other was unsatisfactory as C. Therefore, it was confirmed that the two effects were generally contradictory.

[(C) Inkjet printing]

Inkjet printing was performed on the "OK Topcoat+" made by OJI PAPER CO., LTD. using the inks obtained in

Examples 1, 4 and 13 with a printer incorporating an inkjet head KJ4B-YH (600 dpi × 600 dpi) made by KYOCERA Corporation under conditions of a droplet size of 12 pL and a speed of 25 m/minutes. In the inkjet printing, it was confirmed by test drawing that there was no nozzle disconnected, and thereafter a 100% duty solid image was printed 80 cm. Immediately after the printing of the solid image, the test printing was performed again, and thus the number of nozzles disconnected was checked. Consequently, for each of the inks used, there was no nozzle disconnected, and thus it was confirmed that the inkjet printing was performed satisfactorily.

## Claims

1. An ink comprising: a water-insoluble coloring agent; a oxidized polyethylene wax; a compound represented by formula (1) or formula (2) below and having an HLB value of 7.5 to 20.0; and water:

$$R^1\text{-}\overset{\displaystyle O}{\overset{\|}{C}}\text{-O-}[(EO)_{m1}(PO)_{n1}]\text{-H} \qquad (1)$$

wherein in the formula (1), $R^1$ represents a linear or branched C7-C40 hydrocarbon group, EO represents an ethyleneoxy group, PO represents a propyleneoxy group, m1 averages 1 to 300, n1 averages 0 to 10 and when the m1 and the n1 is 1 or more, the EO and the PO are arranged in any order; and

$$R^2\text{-}\overset{\displaystyle O}{\overset{\|}{C}}\text{-O-}[(EO)_{m2}(PO)_{n2}]\text{-}\overset{\displaystyle O}{\overset{\|}{C}}\text{-}R^3 \qquad (2)$$

wherein in the formula (2), $R^2$ and $R^3$ each independently represent a linear or branched C7-C40 hydrocarbon group, EO represents an ethyleneoxy group, PO represents a propyleneoxy group, m2 averages 1 to 300, n2 averages 0 to 10 and when the m2 and the n2 are 1 or more, the EO and the PO are arranged in any order.

2. The ink according to claim 1, further comprising: at least one type selected from a glycol ether and a C4-C12 alkanediol.

3. The ink according to claim 1 or 2, further comprising: a dispersing agent.

4. An inkjet printing method of performing printing by causing an inkjet printer to discharge a droplet of the ink according to any one of claims 1 to 3 and attaching the droplet to a printing medium.

5. The inkjet printing method according to claim 4, wherein the printing medium is nonabsorbent or is poorly absorbent of ink.

6. A printing medium to which the ink according to any one of claims 1 to 3 is attached.

7. The printing medium according to claim 6, wherein the printing medium is nonabsorbent or poorly absorbent of ink.

## Patentansprüche

1. Eine Tinte, umfassend: ein wasserunlösliches Färbemittel; ein oxidiertes Polyethylen-Wachs; eine Verbindung, die durch die nachstehende Formel (1) oder Formel (2) dargestellt wird und einen HLB-Wert von 7,5 bis 20,0 aufweist; und Wasser:

$$R^1\text{-}\overset{\displaystyle O}{\overset{\|}{C}}\text{-O-}[(EO)_{m1}(PO)_{n1}]\text{-H} \qquad (1)$$

wobei in Formel (1) $R^1$ eine lineare oder verzweigte C7-C40-Kohlenwasserstoffgruppe darstellt, EO eine Ethylenoxygruppe darstellt, PO eine Propylenoxygruppe darstellt, m1 im Durchschnitt 1 bis 300 beträgt, n1 im Durchschnitt 0 bis 10 beträgt und, wenn m1 und n1 1 oder mehr betragen, die EO- und PO-Gruppen in beliebiger Reihenfolge angeordnet sind; und

$$R^2\text{-}\overset{\overset{\displaystyle O}{\|}}{C}\text{-O-}[(EO)_{m2}(PO)_{n2}]\text{-}\overset{\overset{\displaystyle O}{\|}}{C}\text{-}R^3 \qquad (2)$$

wobei in der Formel (2) $R^2$ und $R^3$ jeweils unabhängig voneinander eine lineare oder verzweigte C7-C40-Kohlenwasserstoffgruppe darstellen, EO eine Ethylenoxygruppe darstellt, PO eine Propylenoxygruppe darstellt, m2 im Durchschnitt 1 bis 300 beträgt, n2 im Durchschnitt 0 bis 10 beträgt und, wenn m2 und n2 1 oder mehr betragen, die EO- und PO-Gruppen in beliebiger Reihenfolge angeordnet sind.

**2.** Die Tinte nach Anspruch 1, die ferner umfasst: mindestens eine Verbindung, ausgewählt aus einem Glykolether und einem C4-C12-Alkandiol.

**3.** Tinte nach Anspruch 1 oder 2, die ferner umfasst: ein Dispergiermittel.

**4.** Ein Tintenstrahldruckverfahren zum Durchführen eines Druckvorgangs, bei dem ein Tintenstrahldrucker veranlasst wird, ein Tröpfchen der Tinte gemäß einem der Ansprüche 1 bis 3 auszustoßen, und das Tröpfchen auf ein Druckmedium aufgebracht wird.

**5.** Das Tintenstrahldruckverfahren nach Anspruch 4, wobei das Druckmedium nicht oder nur schwach Tinte aufnimmt.

**6.** Ein Druckmedium, auf dem die Tinte gemäß einem der Ansprüche 1 bis 3 haftet.

**7.** Das Druckmedium nach Anspruch 6, wobei das Druckmedium nicht oder nur schwach Tinte aufnimmt.

## Revendications

**1.** Une encre comprenant : un agent colorant insoluble dans l'eau ; une cire de polyéthylène oxydée ; un composé représenté par la formule (1) ou la formule (2) ci-dessous et ayant une valeur HLB de 7,5 à 20,0 ; et de l'eau :

$$R^1\text{-}\overset{\overset{\displaystyle O}{\|}}{C}\text{-O-}[(EO)_{m1}(PO)_{n1}]\text{-H} \qquad (1)$$

dans laquelle, dans la formule (1), $R^1$ représente un groupe hydrocarboné linéaire ou ramifié en C7-C40, EO représente un groupe éthylèneoxy, PO représente un groupe propylèneoxy, m1 est en moyenne de 1 à 300, n1 est en moyenne de 0 à 10 et lorsque m1 et n1 sont égaux ou supérieurs à 1, les groupes EO et PO sont disposés dans un ordre quelconque ; et

$$R^2\text{-}\overset{\overset{\displaystyle O}{\|}}{C}\text{-O-}[(EO)_{m2}(PO)_{n2}]\text{-}\overset{\overset{\displaystyle O}{\|}}{C}\text{-}R^3 \qquad (2)$$

dans laquelle, dans la formule (2), $R^2$ et $R^3$ représentent chacun indépendamment un groupe hydrocarboné linéaire ou ramifié en C7-C40, EO représente un groupe éthylèneoxy, PO représente un groupe propylèneoxy, m2 est en moyenne de 1 à 300, n2 est en moyenne de 0 à 10 et lorsque m2 et n2 sont supérieurs ou égaux à 1, les EO et les PO sont disposés dans un ordre quelconque.

**2.** L'encre selon la revendication 1, comprenant en outre : au moins un type choisi parmi un éther de glycol et un alcanediol en C4-C12.

3. L'encre selon la revendication 1 ou 2, comprenant en outre : un agent dispersant.

4. Un procédé d'impression à jet d'encre consistant à effectuer une impression en amenant une imprimante à jet d'encre à éjecter une gouttelette de l'encre selon l'une quelconque des revendications 1 à 3 et à fixer la gouttelette sur un support d'impression.

5. Le procédé d'impression à jet d'encre selon la revendication 4, dans lequel le support d'impression est non absorbant ou faiblement absorbant vis-à-vis de l'encre.

6. Un support d'impression auquel est fixée l'encre selon l'une quelconque des revendications 1 à 3.

7. Le support d'impression selon la revendication 6, dans lequel le support d'impression est non absorbant ou faiblement absorbant vis-à-vis de l'encre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005263972 A
- JP 2018162341 A
- WO 2015152291 A
- WO 2013115071 A